# EUROPEAN PATENT APPLICATION

(11) **EP 2 698 347 A1**
(43) Date of publication of application: **19.02.2014**
(21) Application number: 12801341.4
(22) Date of filing: 27.02.2012
(51) Int. Cl.: C01B 25/45, H01M 4/58

(54) **METHOD FOR MANUFACTURING LITHIUM IRON PHOSPHATE**

(30) Priority: 17.06.2011 JP 2011135055
(71) Applicant: JFE Chemical Corporation, Tokyo 111-0051 (JP)
(72) Inventor: TAHARA, Tomoyuki, Tokyo 111-0051 (JP)
(74) Representative: HOFFMANN EITLE
(86) International application number: PCT/JP2012/055487
(87) International publication number: WO 2012/172839

(57) **Abstract**

A method for producing lithium iron phosphate includes an aqueous solution preparation step of preparing an aqueous solution containing a phosphoric acid and a hydroxycarboxylic acid; a first preparation step of adding iron particles containing 0.1 to 2 mass% oxygen to the aqueous solution, and reacting the phosphoric acid and the hydroxycarboxylic acid in the aqueous solution with the iron particles in an oxidizing atmosphere to prepare a first reaction liquid; a second preparation step of adding a lithium source to the first reaction liquid to prepare a second reaction liquid; a third preparation step of adding a carbon source to the second reaction liquid to prepare a third reaction liquid; a precursor formation step of drying the third reaction liquid to form a lithium iron phosphate precursor; and a calcination step of calcining the lithium iron phosphate precursor in a non-oxidizing atmosphere to produce lithium iron phosphate.

## Description

### [Technical Field]

The present invention relates to a method for producing lithium iron phosphate.

### [Background Art]

Small lithium ion batteries are widespread secondary batteries particularly used in mobile devices. They have been upgraded by the improvements of materials such as negative active materials and electrolytic solutions. On the other hand, there has been no major technical innovation of cathode active materials from the start of the commercialization of small lithium ion batteries to present. Thus, the usual material is lithium cobaltate (LiCoO₂) containing expensive rare metals. The lithium cobaltate is not only expensive but also insufficient in thermal stability and chemical stability. At a high temperature of about 180°C, this material releases oxygen to raise a risk of the ignition of organic electrolytic solutions. Thus, safety problems remain.

To expand the application of lithium ion batteries to a wider range including large devices, it is therefore essential that cathode active materials be developed which are less expensive than the conventional lithium cobaltate and are thermally and chemically stable as well as have high safety.

At present, olivine lithium iron phosphate (LiFePO₄, hereinafter simply referred to as "lithium iron phosphate") is a cathode active material that is potential as a new alternative to lithium cobaltate. This iron active material involves little restrictions in terms of resources and has low toxicity and high safety.

This lithium iron phosphate is a highly safe active material because it does not release oxygen at up to about 400°C due to the strong P-O bonds in the crystal structure. Further, this active material exhibits good long-term stability and quick charge characteristics.

To realize the application of lithium iron phosphate as a cathode active material, high-speed charge/discharge characteristics which are required characteristics of cathode active materials should be ensured by improving the electron conductivity of lithium iron phosphate as well as by shortening the diffusion distance of lithium ions.

Allegedly effective approaches to solving such problems are to coat the surface of lithium iron phosphate particles with a conductive substance and to reduce the size of lithium iron phosphate particles to a fine particle diameter of about 100 nm so as to increase the reactive surface area. It has been also reported that doping of other elements is effective to improve the electron conductivity and to stabilize the crystal structure.

Thus, the development of low-cost and stable methods for producing such fine lithium iron phosphate particles coated with a conductive substance as described above is important for the practical application of lithium iron phosphate as a cathode active material.

Known methods for the low-cost production of lithium iron phosphate utilize inexpensive iron particles (such as metallic iron or iron powder) as the iron source.

For example, Patent Literature 1 describes a method in which metallic iron is reacted with a compound releasing phosphate ions in an aqueous solution, thereafter lithium carbonate or lithium hydroxide is added to prepare a precursor of lithium iron phosphate, the precursor is dried and subjected to primary calcination at a temperature in the range of 300 to 450°C, and the resultant product is calcined at 500 to 800°C together with a substance capable of pyrolytically forming conductive carbon.

Patent Literature 2 describes a method in which an iron powder, a lithium salt and a phosphate compound are dissolved in an aqueous citric acid solution to prepare a precursor, and the precursor is spray dried and is thereafter calcined at a temperature of not less than 500°C.

Patent Literature 3 describes a method in which an iron powder is reacted in an aqueous solution containing phosphoric acid and citric acid, thereafter lithium hydroxide is added, further a metal oxide or a metal salt which can change into a conductive oxide upon calcination is added, the resultant precursor is dried, and finally the dry matter from the precursor is calcined.

### [Citation List]

### [Patent Literature]

[PTL 1] Japanese Patent No. 4448976
[PTL 2] Japanese Patent No. 4223463
[PTL 3] Japanese Unexamined Patent Application Publication No. 2007-305585

### [Summary of Invention]

### [Technical Problem]

In the method described in Patent Literature 1, however, the preparation of the precursor involves the reaction of 99.9% or higher purity metallic iron with phosphoric acid and thus results in the formation and growth of aggregated particles of iron phosphate (Fe₃(PO₄)₂·8H₂O) which is a hardly soluble divalent iron compound. As a result, the solution becomes a highly viscous creamy substance exhibiting a white to light blue color. Thus, the solution is not stirred sufficiently to cause problems such as easy occurrence of unreacted metallic iron and a failure to mix the materials homogeneously.

Patent Literature 1 also discloses that acids such as hydrochloric acid and oxalic acid are added to promote the reaction of unreacted metallic iron. However, the addition of hydrochloric acid is likely to contribute to the oxidization of the product, and the addition of oxalic acid results in the formation of stable simple iron oxalate as a precipitate. Thus, it is difficult to prepare a homogeneous precursor.

Further, carbon black or the like added as the conductive carbon in the method of Patent Literature 1 is difficult to mix homogeneously within the precursor on the atomic level. Thus, the effects thereof as a reducing agent are low in the temperature range in the primary calcination which can easily oxidize the precursor.

Furthermore, the method of Patent Literature 1 entails a large number of steps because calcination is carried out two times.

In the method described in Patent Literature 2, the iron powder is dissolved in an aqueous citric acid solution containing a lithium salt and a phosphate compound. This dissolution requires a long time, and thus the method is not economical.

Further, Patent Literature 2 describes that effective divalent iron is formed by oxidizing iron with an organic acid or mixed organic acids. However, the stable formation of divalent iron is difficult by simply mixing the materials.

In the case where the lithium salt used in the method of Patent Literature 2 is lithium nitrate, the nitrate ions act as an oxidizer during calcination. When the salt is lithium acetate, the method is not appropriate for the purpose of reducing the costs because of the expensiveness of the material.

In the method described in Patent Literature 3, the iron in the precursor is oxidized to trivalent iron and the product is ferric phosphate which is a trivalent iron compound because of the failure of citric acid to effectively function as a chelating agent in the reaction of the iron powder with phosphoric acid.

Patent Literature 3 describes an example in which vanadium oxide (V₂O₅) is added as the conductive oxide. However, because the vanadium oxide is added after the formation of the precursor of lithium iron phosphate, vanadium is not incorporated as a dopant but is attached to the surface of lithium iron phosphate particles.

In the production of lithium iron phosphate using iron particles as the iron source, as described above, the existing techniques are incapable of sufficiently controlling the reaction of iron particles. Because of the consequent results such as the occurrence of unreacted iron particles or the formation of a crystalline trivalent iron compound due to the excessive oxidation of iron, the homogeneous mixing and preparation of a precursor of lithium iron phosphate on the atomic level is infeasible. This is the reason why a sufficient discharge capacity of the final lithium iron phosphate cannot be ensured. In attempts to improve the characteristics of lithium iron phosphate by introducing substitutional elements, the existing techniques are incapable of uniform introduction of substitutional elements.

The present invention has been made in view of the circumstances described above. It is therefore an object of the invention to provide a method which is capable of controlling the reaction of iron particles to allow for the preparation of a precursor of lithium iron phosphate homogeneously mixed on the atomic level and thus produces lithium iron phosphate with excellent discharge capacity at low cost.

### [Solution to Problem]

The present inventors carried out extensive studies in order to achieve the above object. As a result, the present inventors have found that, for the production of lithium iron phosphate from inexpensive iron particles so as to realize a high-performance cathode active material with high discharge capacity, it is effective to react the iron particles with a phosphoric acid in the presence of a hydroxycarboxylic acid as well as to carry out the reaction in an oxidizing atmosphere to continuously replenish oxygen chemically bonded to the surface of the iron particles. According to the finding by the present inventors, the reaction in the above manner gives a chelate of iron phosphate uniformly dispersed in the aqueous solution, and the subsequent addition of a lithium source results in a precursor of lithium iron phosphate in which the materials have been mixed homogeneously on the atomic level. Further, the present inventors have found that lithium iron phosphate with high discharge capacity can be produced by adding a carbon source to the solution of the lithium iron phosphate precursor, drying the product, and calcining the dry matter in a non-oxidizing atmosphere. Regarding the improvements of characteristics of lithium iron phosphate by the introduction of substitutional elements, the present inventors have found that uniformly substituted lithium iron phosphate can be obtained by adding a metal or a compound of a substitutional element to the aqueous solution containing the phosphoric acid and the hydroxycarboxylic acid.

That is, the present invention provides the following (1) to (11).
(1) A method for producing lithium iron phosphate, including:
   an aqueous solution preparation step of preparing an aqueous solution containing a phosphoric acid and a hydroxycarboxylic acid;
   a first preparation step of adding iron particles containing 0.1 to 2 mass% oxygen to the aqueous solution, and reacting the phosphoric acid and the hydroxycarboxylic acid in the aqueous solution with the iron particles in an oxidizing atmosphere to prepare a first reaction liquid;
   a second preparation step of adding a lithium source to the first reaction liquid to prepare a second reaction liquid;
   a third preparation step of adding a carbon source to the second reaction liquid to prepare a third reaction liquid;
   a precursor formation step of drying the third reaction liquid to form a lithium iron phosphate precursor; and
   a calcination step of calcining the lithium iron phosphate precursor in a non-oxidizing atmosphere to produce lithium iron phosphate.
(2) The method for producing lithium iron phosphate described in (1), further comprising a dissolution step of dissolving a metal or a compound of an element for substituting for iron, into the aqueous solution resulting from the aqueous solution preparation step.
(3) The method for producing lithium iron phosphate described in (2), wherein the element for substituting for iron is one selected from the group consisting of titanium, vanadium, zirconium and manganese.
(4) The method for producing lithium iron phosphate described in (1), wherein the hydroxycarboxylic acid has a residual carbon ratio of not less than 3 mass%.
(5) The method for producing lithium iron phosphate described in (1), wherein the hydroxycarboxylic acid is at least one selected from the group consisting of lactic acid, tartaric acid, malic acid and citric acid.
(6) The method for producing lithium iron phosphate described in (1), wherein the amount of addition of the hydroxycarboxylic acid is 0.1 to 0.5 mol per 1 mol of iron in the iron particles.
(7) The method for producing lithium iron phosphate described in (1), wherein the third preparation step includes adding the carbon source to the second reaction liquid to prepare the third reaction liquid such that the amount of carbon present in lithium iron phosphate after calcination will become 1 to 5 mass%.
(8) The method for producing lithium iron phosphate described in (1), wherein the carbon source is a substance pyrolytically forming carbon during calcination, or a conductive carbon.
(9) The method for producing lithium iron phosphate described in (1), wherein the carbon source is at least one selected from the group consisting of glucose, fructose, maltose, sucrose, ascorbic acid and erythorbic acid.
(10) The method for producing lithium iron phosphate described in (1), wherein the carbon source is at least one selected from the group consisting of carbon blacks, acetylene blacks, Ketjen blacks, vapor grown carbon fibers (VGCF), carbon nanofibers, graphites and fullerenes.
(11) The method for producing lithium iron phosphate described in (1), wherein the lithium iron phosphate is a cathode active material for secondary batteries.

### [Advantageous Effects of Invention]

According to the present invention, a method can be provided for producing lithium iron phosphate which is inexpensive and has excellent discharge capacity.

### [Description of Embodiments]

A method for producing lithium iron phosphate according to the present invention (hereinafter, also referred to as "production method of the invention") includes an aqueous solution preparation step of preparing an aqueous solution containing a phosphoric acid and a hydroxycarboxylic acid; a first preparation step of adding iron particles containing 0.1 to 2 mass% oxygen to the aqueous solution, and reacting the phosphoric acid and the hydroxycarboxylic acid in the aqueous solution with the iron particles in an oxidizing atmosphere to prepare a first reaction liquid; a second preparation step of adding a lithium source to the first reaction liquid to prepare a second reaction liquid; a third preparation step of adding a carbon source to the second reaction liquid to prepare a third reaction liquid; a precursor formation step of drying the third reaction liquid to form a lithium iron phosphate precursor; and a calcination step of calcining the lithium iron phosphate precursor in a non-oxidizing atmosphere to produce lithium iron phosphate.

The production method of the invention will be described in detail below.

### [Aqueous solution preparation step]

The aqueous solution preparation step is a step of preparing an aqueous solution containing a phosphoric acid and a hydroxycarboxylic acid. The phosphoric acid and the hydroxycarboxylic acid in the aqueous solution prepared in the aqueous solution preparation step will be described in detail later. The water in the aqueous solution is not particularly limited. Suitable examples include ion exchange water and distilled water.

### [First preparation step]

The first preparation step is a step of adding iron particles containing 0.1 to 2 mass% oxygen to the aqueous solution prepared in the aqueous solution preparation step, and reacting the phosphoric acid and the hydroxycarboxylic acid in the aqueous solution with the iron particles in an oxidizing atmosphere to prepare a first reaction liquid.

In the first preparation step, the iron particles containing 0.1 to 2 mass% oxygen are added to the aqueous solution containing the phosphoric acid and the hydroxycarboxylic acid, and are reacted therewith in an oxidizing atmosphere to form a chelate of iron phosphate.

For example, the iron particles may be an iron powder. Specific examples of the iron powders include a reduced iron powder obtained by reducing mill scales (iron oxide) with cokes; an atomized iron powder obtained by the atomization of a molten steel with high-pressure water followed by cooling; and an electrolytic iron powder deposited on a cathode by the electrolysis of an aqueous iron salt solution.

The average particle diameter of the iron powder is preferably not more than 100 µm, and more preferably 30 to 80 µm. Such an average particle diameter is advantageous in the formation of a chelate of iron phosphate because the subsequent reaction with the phosphoric acid and the hydroxycarboxylic acid is promoted. The average particle diameter was determined in accordance with JIS M 8706.

Although the average particle diameter of a general industrial iron powder is usually 70 to 80 µm, the powder includes particles having a maximum particle diameter of 150 to 180 µm. It is therefore recommended that such a powder be used after the reactive area is increased as required, for example, by removing coarse particles through sieving or by mechanically grinding coarse particles into finer sizes.

In the specification, the "iron particles" used in the invention may be also referred to with other terms such as "iron", "metallic iron" and "iron powder" appropriately.

In the invention, the oxygen present in the iron particles indicates oxygen chemically bonded to iron. By regulating the oxygen content in the iron particles to be 0.1 to 2 mass%, and preferably 0.6 to 2 mass%, the formation of a chelate of iron phosphate at an initial stage of the reaction is promoted.

In contrast, if the oxygen content in the iron particles is less than 0.1 mass%, the direct reaction between the metallic iron and the phosphoric acid takes place preferentially. Thus, the reaction tends to result in the formation and growth of aggregated particles of iron phosphate (Fe₃(PO₄)₂·8H₂O) which is a hardly soluble divalent iron compound. As a result, the aqueous solution may become a highly viscous creamy substance exhibiting a white to light blue color. Thus, the aqueous solution is not stirred sufficiently to cause problems such as easy occurrence of unreacted metallic iron and a failure to mix the materials homogeneously.

If the oxygen content in the iron particles exceeds 2 mass%, iron oxide scales are segregated on the surface of the iron powder to inhibit the reaction with the aqueous solution of the phosphoric acid and the hydroxycarboxylic acid.

In the case of a reduced iron powder obtained simply by reducing mill scales (iron oxide) with cokes, or an atomized iron powder obtained simply by the atomization of a molten steel with high-pressure water followed by cooling and drying, the oxygen content in the iron particles is 0.5 to 1.5 mass%. If such iron particles are reduced with hydrogen, the oxygen content becomes 0.1 to 0.4 mass%.

It is not particularly necessary that the iron particles used in the present invention be expensive iron particles that have been subjected to a hydrogen reduction treatment.

The oxygen content in the iron particles is determined with TC436 manufactured by LECO JAPAN CORPORATION in accordance with a vacuum melting infrared absorption method specified in JIS Z 2613 (1992).

It is necessary that the addition and the reaction of the iron particles with the aqueous solution containing the phosphoric acid and the hydroxycarboxylic acid take place in an oxidizing atmosphere.

As oxygen on the surface of the iron particles is consumed with the progress of the reaction forming the chelate (hereinafter, also "chelating reaction"), the continuation of the chelating reaction becomes infeasible and the direct reaction between the metallic iron and the phosphate ions takes place preferentially to result in the formation and growth of aggregated particles of hardly soluble iron phosphate.

Thus, the present invention provides that the reaction is performed in an oxidizing atmosphere so as to excessively oxidize the surface of the iron particles and thereby to replenish oxygen chemically bonded to the iron particles, thereby allowing for the continuation of the chelating reaction.

The oxidizing atmosphere in the invention is such a state that the surface of the iron particles in the aqueous solution can be oxidized appropriately. For example, such a state may be realized by a method such as bringing the interface of the aqueous solution into contact with an oxygen-containing gas; or blowing an oxygen-containing gas into the aqueous solution. Examples of specific operations performed in such methods include stirring in an air atmosphere, and oxygen feed by air bubbling.

The phosphoric acid is preferably an aqueous solution of orthophosphoric acid (H₃PO₄). An aqueous solution of a highly condensed phosphoric acid (Hₙ₊₂PₙO₃ₙ₊₁) may also be used. Orthophosphoric acid is usually available as an industrial product in the form of a 75 to 85 mass% aqueous solution.

The phosphoric acid may be added in a stoichiometric amount, namely, 1 mol relative to 1 mol of iron, or may be added in about 0.1 mol excess.

The hydroxycarboxylic acid is a carboxylic acid having a hydroxyl group and a carboxyl group, and functions as a chelating agent in the formation of a chelate of iron phosphate.

Examples of the hydroxycarboxylic acids used in the invention include those having strong chelating power with respect to iron such as lactic acid, tartaric acid, malic acid and citric acid. In particular, citric acid is preferable because it has strong chelating power and forms a chelate resistant to oxidation.

The hydroxycarboxylic acid forms residual carbon during calcination and thus functions also as a reducing agent. In order to obtain this function, it is preferable in the invention that the hydroxycarboxylic acid have a residual carbon ratio of not less than 3 mass%. If the residual carbon ratio is less than 3 mass%, the obtained lithium iron phosphate precursor may be oxidized with trace oxygen present in the atmosphere. If the residual carbon ratio exceeds 20 mass%, an excessively large amount of carbon remains after calcination. Thus, the residual carbon ratio is preferably not more than 20 mass%.

The residual carbon ratios of the hydroxycarboxylic acids are 7 mass% for lactic acid, 7 mass% for tartaric acid, 12 mass% for malic acid, and 7 mass% for citric acid monohydrate. Carboxylic acids such as oxalic acid dihydrate and acetic acid have a residual carbon ratio of less than 1 mass%, and thus exhibit little reducing action during calcination.

The term "residual carbon ratio" in the invention indicates a value obtained by quantitatively determining carbon remaining after calcination in accordance with a high frequency induction heating furnace combustion-infrared absorption method specified in JIS G 1211 (1995), and dividing the amount by the initial amount of the hydroxycarboxylic acid.

The amount of addition of the hydroxycarboxylic acid is preferably 0.1 to 0.5 mol, and more preferably 0.15 to 0.3 mol per 1 mol of iron.

If the amount of addition is less than 0.1 mol, the chelating effects by the hydroxycarboxylic acid are reduced with the result that the direct reaction takes place between the metallic iron and the phosphate ions to result in the formation and growth of aggregated particles of hardly soluble iron phosphate. Consequently, the aqueous solution may become a highly viscous creamy substance exhibiting a white to light blue color and may not be stirred sufficiently to cause problems such as easy occurrence of unreacted metallic iron and a failure to mix the materials homogeneously.

If the amount of addition is in excess of 0.5 mol, the chelate of iron phosphate that is formed is dispersed uniformly in the aqueous solution (the materials are mixed homogeneously); however, such excessive addition results in an excessively large amount of residual carbon after calcination and possibly results in a decrease in the apparent discharge capacity of the final lithium iron phosphate.

In contrast, the amount of addition in the above range ensures that the occurrence of unreacted metallic iron is unlikely, the materials are mixed homogeneously, and the obtainable lithium iron phosphate exhibits a good apparent discharge capacity.

In the chelating reaction in the first preparation step, the temperature of the aqueous solution is preferably 10 to 40°C, and more preferably 20 to 30°C.

By regulating the temperature of the aqueous solution to be in the range of 10 to 40°C, a chelate of iron phosphate can be formed continuously in such a manner that oxygen on the surface of the iron particles is consumed by the chelating reaction and the newly formed surface of the iron particles is oxidized appropriately by the contact with oxygen such as dissolved oxygen in the aqueous solution or air bubbles.

In contrast, if the temperature of the aqueous solution is less than 10°C, the chelating reaction of the iron particles becomes slow and may require a long time to complete.

If the temperature of the aqueous solution is above 40°C, the oxidation for replenishing the surface of the iron particles with oxygen cannot keep up with the consumption of oxygen. Consequently, the direct reaction between the metallic iron and the phosphoric acid takes place preferentially and results in the formation and growth of aggregated particles of hardly soluble iron phosphate. As a result, the aqueous solution may become a highly viscous creamy substance exhibiting a white to light blue color.

In the invention, it is considered probable that the addition of the iron particles to the aqueous solution containing the phosphoric acid and the hydroxycarboxylic acid and the subsequent exposure of the materials to an oxidizing atmosphere induce the chelation between the hydroxycarboxylic acid and iron via an oxygen atom or a hydroxyl group present on the surface of the iron particles as well as the oxidation of iron by the bonding of the phosphoric acid to form a chelate of iron phosphate represented by Formula (1) below, thereby resulting in a first reaction liquid in which the chelate is uniformly dispersed.

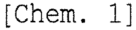

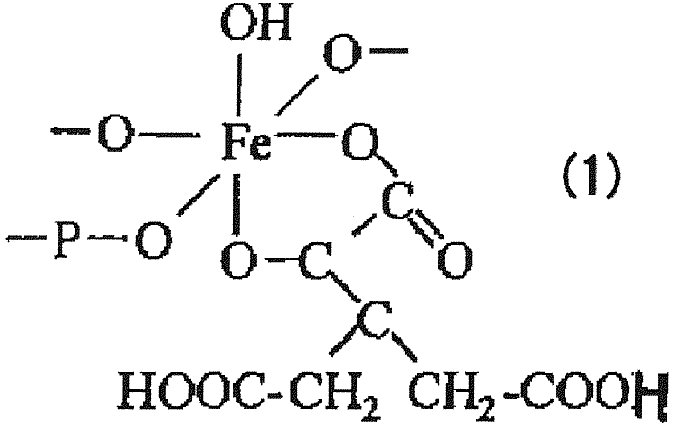

### [Second preparation step]

The second preparation step is a step of adding a lithium source to the first reaction liquid prepared in the first preparation step to prepare a second reaction liquid.

In the second preparation step, the addition of a lithium source to the first reaction liquid in which the chelate represented by Formula (1) is uniformly dispersed results in the formation of a precursor of lithium iron phosphate in which the materials have been mixed homogeneously on the atomic level.

The lithium source added to the first reaction liquid is not particularly limited as long as it is a water-soluble lithium salt. Lithium hydroxide and lithium carbonate are preferable because no harmful gases are generated during calcination.

When the lithium source is added to the first reaction liquid, the reaction liquid turns to dark green and a second reaction liquid with a pH of 6 to 7 is obtained. An X-ray diffractometry analysis with respect to a dry matter obtained by drying the second reaction liquid detects no crystalline compounds and confirms the presence of an amorphous phase resulting from the chelate homogeneously mixed on the atomic level.

In the preparation of the second reaction liquid by the addition of the lithium source to the first reaction liquid, it is probable that part of the carboxyl hydrogen atoms of the chelate represented by Formula (1) are substituted for by lithium to form a chelate of lithium iron phosphate represented by Formula (2) below.

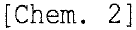

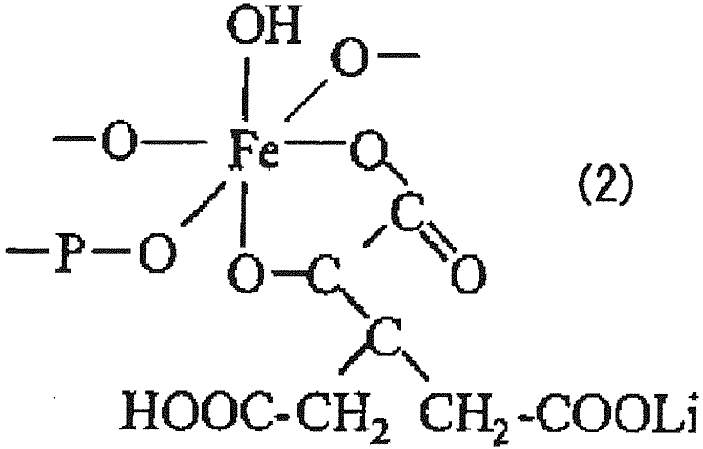

While this chelate of lithium iron phosphate is present as a dispersed phase in the second reaction liquid, part of the chelate may be present as aggregated particles to form a precipitate.

In such a case, it is desirable that the aggregated particles be reduced in size by wet mechanical grinding before drying in the later step so that a homogenous precursor solution will be obtained. Examples of the wet grinding methods include ultrasonicating, wet jet milling and bead milling.

### [Third preparation step]

The third preparation step is a step of adding a carbon source to the second reaction liquid prepared in the second preparation step to prepare a third reaction liquid.

The carbon source added to the second reaction liquid is preferably a substance pyrolytically forming carbon during calcination, or a conductive carbon.

The substance pyrolytically forming carbon during calcination is preferably a substance that is melted during calcination to wet the surface of the lithium iron phosphate particles, or a substance that generates a gaseous substance and causes the precipitation of carbon on the surface of the lithium iron phosphate particles. Specific examples include sugars such as glucose, fructose, maltose, sucrose, ascorbic acid and erythorbic acid; and water-soluble polymers such as polyvinyl alcohols (PVA) and polyethylene glycols.

Examples of the conductive carbons include carbon blacks, acetylene blacks, Ketjen blacks, vapor grown carbon fibers (VGCF), carbon nanofibers, graphites and fullerenes.

These may be used singly, or two or more may be used in combination.

The amount of the carbon source added to the second reaction liquid is preferably such that the amount of carbon present in lithium iron phosphate after calcination will become 1 to 5 mass%, and more preferably 1.5 to 3 mass%.

If the amount of carbon is less than 1 mass%, the conductive properties of lithium iron phosphate may be insufficient and the lithium iron phosphate particles may fail to reach its full performance as a cathode active material. If the amount of carbon exceeds 5 mass%, the apparent discharge capacity may be decreased.

The amount of addition of the carbon source in the above range ensures that lithium iron phosphate will exhibit sufficient conductive properties and a good apparent discharge capacity.

### [Precursor formation step]

The precursor formation step is a step of drying the third reaction liquid prepared in the third preparation step to form a lithium iron phosphate precursor.

The lithium iron phosphate precursor resulting from the drying of the third reaction liquid is a powder. The particle diameter thereof is not particularly limited, but is preferably 50 to 200 µm from the viewpoint of easy handling.

The third reaction liquid may be dried by any method without limitation. A spray drying method is preferably adopted because of good drying efficiency. Because a spray drying method is such a type of method that dries a sample solution by spraying it into high-temperature hot air, a powder with a uniform shape may be obtained.

When a spray drying method is adopted, the inlet temperature of the spray dryer (the temperature of the hot air) is preferably 100 to 250°C. By configuring the inlet temperature to be 150 to 250°C, the temperature of the dry matter formed will reach 100 to 150°C, although variable depending on the balance between the temperature and the liquid feed.

### [Calcination step]

The calcination step is a step of calcining the lithium iron phosphate precursor formed in the precursor formation step, in a non-oxidizing atmosphere to produce lithium iron phosphate.

By calcining the lithium iron phosphate precursor formed in the precursor formation step in a non-oxidizing atmosphere, the hydroxyl groups and the organic matters present in the lithium iron phosphate precursor are pyrolytically removed in the forms of H₂O, CO₂, H₂ and hydrocarbons. As a result, the dry matter having an amorphous phase is crystallized into a crystal of lithium iron phosphate with an olivine structure while the pyrolytic carbon is precipitated on the surface of the lithium iron phosphate particles.

For example, the non-oxidizing atmosphere indicates an inert gas atmosphere such as nitrogen or argon with an oxygen concentration of not more than 1000 ppm; or a reducing gas atmosphere containing a reducing gas such as hydrogen or carbon monoxide. The calcination is performed in a non-oxidizing atmosphere to prevent the occurrence of oxidation.

The temperature at which the calcination is performed (the calcination temperature) in the calcination step is preferably not less than 300°C, more preferably not less than 500°C, and still more preferably 600 to 800°C.

Calcination at a temperature of less than 300°C may result in insufficient pyrolytic removal of volatile components such as H₂O, CO₂, H₂ and hydrocarbons as well as a failure to induce crystallization. If the calcination temperature exceeds 800°C, the coarsening of the obtainable crystal particles may take place and byproducts such as Fe₂P may be formed.

The calcination temperature in the above range ensures that the pyrolytic removal of volatile components and the crystallization take place sufficiently as well as that the coarsening of crystal particles and the formation of byproducts such as Fe₂P are suppressed.

The primary particle diameter of lithium iron phosphate obtained by calcining the lithium iron phosphate precursor in a non-oxidizing atmosphere is preferably not more than 200 nm, and more preferably 50 to 150 nm in order to shorten the diffusion distance of lithium ions.

In the invention, the primary particle diameter of lithium iron phosphate is obtained by an X-ray diffractometry analysis using Ultima IV (X-ray: Cu-Kα1) manufactured by Rigaku Corporation and according to the Scherrer equation. The primary particle diameter is the diameter of the crystallite that is the smallest crystal unit.

According to the production method of the invention, as described above, a solution (the second reaction liquid) of the lithium iron phosphate precursor in which the materials have been homogeneously mixed on the atomic level is obtained, the carbon source is added to this solution, the liquid is dried, and the dry matter is calcined in a non-oxidizing atmosphere to produce lithium iron phosphate exhibiting high discharge capacity.

Because cathode active materials require high-speed charge/discharge characteristics, lithium iron phosphate obtained by the inventive production method is suitably used as a cathode active material for secondary batteries such as lithium ion batteries.

Because of the use of inexpensive iron particles, the present invention also realizes a reduction of costs.

In the present invention, it is also possible to obtain lithium iron phosphate in which a substitutional element has substituted for iron. Such lithium iron phosphate often achieves higher discharge characteristics.

In this case, for example, a metal or a compound of an element for substituting for iron may be preliminarily dissolved in the aqueous solution containing the phosphoric acid and the hydroxycarboxylic acid in the aforementioned aqueous solution preparation step. In this manner, the substitutional element may be mixed homogeneously.

Examples of the metals or compounds of elements for substituting for iron include titanium materials such as Ti(OH)₄ and TiOSO₄·H₂O; vanadium materials such as FeV, V₂O₅ and VOSO₄·2H₂O; magnesium materials such as Mg, MgO and Mg(OH)₂; zirconium materials such as ZrO(CH₃COO)₂; and manganese materials such as MnCO₃·nH₂O and Mn(CH₃COO)₂.

In the case where the substitutional element which is dissolved preliminarily in the aqueous solution containing the phosphoric acid and the hydroxycarboxylic acid is reduced to a lower oxidation state by the addition of the iron particles, an action as an electron donor can be expected.

From the viewpoint that the effects of the substitution are seen easily, the amount of substitution is preferably such that not less than 0.01 mol%, and more preferably not less than 0.05 mol% of the iron atoms are substituted for, although variable depending on the kind of substitutional element.

The upper limit of the amount of substitution is not fixed and is variable significantly depending on factors such as the ion radius, the valence and the coordination number of the substitutional element. If the amount of substitution exceeds a threshold, however, characteristics tend to be deteriorated due to reasons such as the formation of an impurity phase and the electron localization due to a change in the band structure.

### [EXAMPLES]

The present invention will be described in detail by presenting examples hereinbelow without limiting the scope of the invention.

### (EXAMPLE 1)

Into distilled water: 2000 g, 85 mass% phosphoric acid: 10 mol and citric acid monohydrate: 2 mol were dissolved. An iron powder (manufactured by JFE Steel Corporation, oxygen content: 0.68 mass%, average particle diameter: 80 µm): 10 mol was added to this mixture solution. While performing stirring, the reaction was carried out at a liquid temperature: 25°C in an air atmosphere for 1 day. Subsequently, lithium carbonate: 5 mol was added to form lithium iron phosphate. Finally, ascorbic acid: 80 g as a carbon source was added, thereby preparing a precursor solution. This precursor was dried with a spray drier (FOC16 manufactured by OHKAWARA KAKOHKI CO., LTD.) at an inlet temperature: 200°C. Thus, a dry powder was obtained which had an average particle diameter of about 50 µm according to SEM observation. This dry powder was calcined in a stream of nitrogen at 700°C for 5 hours, and the particles were sieved through 63 µm openings. Thus, lithium iron phosphate was prepared.

The oxygen content in the iron powder was determined with TC436 manufactured by LECO JAPAN CORPORATION.

### (EXAMPLE 2)

Lithium iron phosphate was prepared in the same manner as in EXAMPLE 1, except that lactic acid: 2 mol was used instead of citric acid monohydrate.

### (EXAMPLE 3)

Lithium iron phosphate was prepared in the same manner as in EXAMPLE 1, except that malic acid: 2 mol was used instead of citric acid monohydrate.

### (EXAMPLE 4)

Lithium iron phosphate was prepared in the same manner as in EXAMPLE 1, except that tartaric acid: 2 mol was used instead of citric acid monohydrate.

### (EXAMPLE 5)

Lithium iron phosphate was prepared in the same manner as in EXAMPLE 1, except that an iron powder (manufactured by JFE Steel Corporation, oxygen content: 0.41 mass%, average particle diameter: 80 µm) was used.

### (EXAMPLE 6)

Lithium iron phosphate was prepared in the same manner as in EXAMPLE 1, except that zirconium oxyacetate: 0.1 mol (substituting for 1 mol% of iron) as a zirconium source was added to and dissolved in the mixture solution of phosphoric acid and citric acid monohydrate, and the same iron powder: 9.9 mol as used in EXAMPLE 1 was added to the mixture solution.

### (EXAMPLE 7)

Lithium iron phosphate was prepared in the same manner as in EXAMPLE 1, except that manganese carbonate (MnCO₃·nH₂O): 7 mol (substituting for 70 mol% of iron) as a manganese source was added to the mixture solution of phosphoric acid and citric acid monohydrate, and the same iron powder: 3 mol as used in EXAMPLE 1 was added to the mixture solution.

### (EXAMPLE 8)

Lithium iron phosphate was prepared in the same manner as in EXAMPLE 1, except that the carbon source was changed from ascorbic acid: 80 g to sucrose: 80 g.

### (EXAMPLE 9)

Lithium iron phosphate was prepared in the same manner as in EXAMPLE 1, except that the carbon source was changed from ascorbic acid: 80 g to a Ketjen black paste (W-376R manufactured by Lion Corporation, concentration 20 mass%): 80 g.

### (EXAMPLE 10)

Lithium iron phosphate was prepared in the same manner as in EXAMPLE 1, except that the carbon source was changed from ascorbic acid: 80 g to ascorbic acid: 95 g.

### (EXAMPLE 11)

Lithium iron phosphate was prepared in the same manner as in EXAMPLE 1, except that vanadium oxide (V₂O₅): 0.05 mol (substituting for 1 mol% of iron) as a vanadium source was added to the mixture solution of phosphoric acid and citric acid monohydrate, and the same iron powder: 9.9 mol as used in EXAMPLE 1 was added to the mixture solution.

### (COMPARATIVE EXAMPLE 1)

Lithium iron phosphate was prepared in the same manner as in EXAMPLE 1, except that the stirring after the addition of the iron powder was carried out in a nitrogen atmosphere.

### (COMPARATIVE EXAMPLE 2)

Lithium iron phosphate was prepared in the same manner as in EXAMPLE 1, except that an iron powder (FEE04PB manufactured by Kojundo Chemical Laboratory Co., Ltd., oxygen content: less than 0.1 mass%, particle diameter: not more than 53 µm) was used.

### (COMPARATIVE EXAMPLE 3)

Lithium iron phosphate was prepared in the same manner as in EXAMPLE 1, except that oxalic acid dihydrate: 2 mol was used instead of citric acid monohydrate.

### (COMPARATIVE EXAMPLE 4)

Into distilled water: 2000 g, 85 mass% phosphoric acid: 10 mol and citric acid monohydrate: 2 mol were dissolved. An iron powder (manufactured by JFE Steel Corporation, oxygen content: 0.68 mass%, average particle diameter: 80 µm): 10 mol was added to this mixture solution. While performing stirring, the reaction was carried out at a liquid temperature: 25°C in an air atmosphere for 1 day. Subsequently, lithium carbonate: 5 mol was added to form a precursor solution of lithium iron phosphate. This precursor solution was dried with a spray drier (FOC16 manufactured by OHKAWARA KAKOHKI CO., LTD.) at an inlet temperature: 200°C. Thus, a dry powder was obtained which had an average particle diameter of about 50 µm according to SEM observation. This dry powder was subjected to primary calcination in a stream of nitrogen at 400°C for 5 hours. Next, ascorbic acid: 80 g as a carbon source was added to the calcined powder, and these were ground and mixed with each other using a wet ball mill. The resultant mixture was dried, subjected to secondary calcination in a stream of nitrogen at 700°C for 10 hours, and finally sieved through 63 µm openings. Thus, lithium iron phosphate was prepared.

The lithium iron phosphates prepared in EXAMPLES 1 to 11 and COMPARATIVE EXAMPLES 1 to 4 were identified (identification of formed phases) by an X-ray diffractometry analysis, and were subjected to the quantitative determination of carbon. Further, the primary particle diameters of the respective lithium iron phosphates were measured.

The X-ray diffractometry analysis was performed with Ultima IV (X-ray: Cu-Kα1) manufactured by Rigaku Corporation. In the quantitative determination of carbon, the carbon content in the lithium iron phosphate was measured with EMIA 620 manufactured by HORIBA, Ltd. The primary particle diameter was obtained by the X-ray diffractometry analysis and according to the Scherrer equation.

The results of the identification analysis and of the measurements of carbon contents and primary particle diameters are described in Table 1 below.

Further, the discharge capacity was measured by the following method with respect to the lithium iron phosphates prepared in EXAMPLES 1 to 11 and COMPARATIVE EXAMPLES 1 to 4.

A paste consisting of the lithium iron phosphate:VGCF:polyvinylidene fluoride (KFL#1320 manufactured by KUREHA CORPORATION) = 86:4:10 (mass ratio) was applied in 10 mg/cm² onto an aluminum foil collector, thereby fabricating a cathode. A half cell (manufactured by Hohsen Corp.) was fabricated using metallic lithium as an anode. The electrolytic solution used was 1M-LiPF₆/EC (ethylene carbonate):EMC (ethyl methyl carbonate) = 3:7 (mass ratio). The discharge capacity was measured under conditions in which the cell was charged to 4.0 V at a constant current of 0.2 mA/cm² and was discharged to 2.5 V at a constant current of 0.2 mA/cm². Only in EXAMPLE 7, the cell was charged to 4.5 V at the constant current. The obtained discharge capacities are described in Table 1 below.

[Table 1]

**Table 1**

| | Formed phases | Carbon content (mass%) | Primary particle diameter (nm) | Discharge capacity (mAh/g) |
|---|---|---|---|---|
| EX. 1 | LiFePO₄ (olivine) | 2.2 | 60 | 154 |
| EX. 2 | LiFePO₄ (olivine) | 2.0 | 62 | 150 |
| EX. 3 | LiFePO₄ (olivine) | 2.4 | 58 | 153 |
| EX. 4 | LiFePO₄ (olivine) | 2.0 | 58 | 151 |
| EX. 5 | LiFePO₄ (olivine) | 2.0 | 61 | 154 |
| EX. 6 | LiFe_{0.99}Zr_{0.01}PO₄ (olivine) | 2.0 | 64 | 152 |
| EX. 7 | LiFe_{0.3}Mn_{0.7}PO₄ (olivine) | 2.0 | 52 | 148 |
| EX. 8 | LiFePO₄ (olivine) | 1.9 | 60 | 150 |
| EX. 9 | LiFePO₄ (olivine) | 1.9 | 60 | 150 |
| EX. 10 | LiFePO₄ (olivine) | 2.4 | 55 | 154 |
| EX. 11 | LiFe_{0.99}Zr_{0.01}PO₄ (olivine) | 2.0 | 59 | 154 |
| COMP. EX. 1 | LiFePO₄ (olivine) | 1.9 | 78 | 140 |
| COMP. EX. 2 | LiFePO₄ (olivine) | 1.9 | 74 | 142 |
| COMP. EX. 3 | LiFePO₄ (olivine), impurity phase | 1.2 | 90 | 135 |
| COMP. EX. 4 | LiFePO₄ (olivine) | 2.1 | 60 | 152 |

As shown in Table 1, the olivine lithium iron phosphates obtained in EXAMPLES 1 to 11 had a carbon content of 1.9 to 2.4 mass% and a primary particle diameter of 52 to 64 nm, and achieved a high discharge capacity.

In contrast, COMPARATIVE EXAMPLES 1 to 3 failed to produce lithium iron phosphates with a sufficient discharge capacity. It is probable that phosphorus, iron and lithium had not been mixed homogeneously on the atomic level in COMPARATIVE EXAMPLES 1 to 3.

By comparing COMPARATIVE EXAMPLE 4 which involved secondary calcination, namely, a larger number of steps with EXAMPLES 1 to 11 with more simplified steps, it has been shown that the lithium iron phosphates in EXAMPLES 1 to 11 exhibited a discharge capacity comparable to that in COMPARATIVE EXAMPLE 4.

## Claims

1. A method for producing lithium iron phosphate, comprising:
an aqueous solution preparation step of preparing an aqueous solution containing a phosphoric acid and a hydroxycarboxylic acid;
a first preparation step of adding iron particles containing 0.1 to 2 mass% oxygen to the aqueous solution, and reacting the phosphoric acid and the hydroxycarboxylic acid in the aqueous solution with the iron particles in an oxidizing atmosphere to prepare a first reaction liquid;
a second preparation step of adding a lithium source to the first reaction liquid to prepare a second reaction liquid;
a third preparation step of adding a carbon source to the second reaction liquid to prepare a third reaction liquid;
a precursor formation step of drying the third reaction liquid to form a lithium iron phosphate precursor; and
a calcination step of calcining the lithium iron phosphate precursor in a non-oxidizing atmosphere to produce lithium iron phosphate.

2. The method for producing lithium iron phosphate according to claim 1, further comprising a dissolution step of dissolving a metal or a compound of an element for substituting for iron, into the aqueous solution resulting from the aqueous solution preparation step.

3. The method for producing lithium iron phosphate according to claim 2, wherein the element for substituting for iron is one selected from the group consisting of titanium, vanadium, zirconium and manganese.

4. The method for producing lithium iron phosphate according to claim 1, wherein the hydroxycarboxylic acid has a residual carbon ratio of not less than 3 mass%.

5. The method for producing lithium iron phosphate according to claim 1, wherein the hydroxycarboxylic acid is at least one selected from the group consisting of lactic acid, tartaric acid, malic acid and citric acid.

6. The method for producing lithium iron phosphate according to claim 1, wherein the amount of addition of the hydroxycarboxylic acid is 0.1 to 0.5 mol per 1 mol of iron in the iron particles.

7. The method for producing lithium iron phosphate according to claim 1, wherein the third preparation step includes adding the carbon source to the second reaction liquid to prepare the third reaction liquid such that the amount of carbon present in lithium iron phosphate after calcination will become 1 to 5 mass%.

8. The method for producing lithium iron phosphate according to claim 1, wherein the carbon source is a substance pyrolytically forming carbon during calcination, or a conductive carbon.

9. The method for producing lithium iron phosphate according to claim 1, wherein the carbon source is at least one selected from the group consisting of glucose, fructose, maltose, sucrose, ascorbic acid and erythorbic acid.

10. The method for producing lithium iron phosphate according to claim 1, wherein the carbon source is at least one selected from the group consisting of carbon blacks, acetylene blacks, Ketjen blacks, vapor grown carbon fibers (VGCF), carbon nanofibers, graphites and fullerenes.

11. The method for producing lithium iron phosphate according to claim 1, wherein the lithium iron phosphate is a cathode active material for secondary batteries.
